**Europäisches Patentamt**

**European Patent Office**

**Office européen des brevets**

(19)

(11) Veröffentlichungsnummer: **0 137 130 B1**

(12) **EUROPÄISCHE PATENTSCHRIFT**

(45) Veröffentlichungstag der Patentschrift:
**03.06.87**

(21) Anmeldenummer: **84107777.9**

(22) Anmeldetag: **04.07.84**

(51) Int. Cl.⁴: **A 47 J 43/25**, B 26 D 3/26

(54) **Halter für ein Küchenngerät.**

(30) Priorität: **17.08.83 DE 8323644 U**

(43) Veröffentlichungstag der Anmeldung:
**17.04.85 Patentblatt 85/16**

(45) Bekanntmachung des Hinweises auf die Patenterteilung:
**03.06.87 Patentblatt 87/23**

(84) Benannte Vertragsstaaten:
**AT BE CH DE FR GB IT LI LU NL SE**

(56) Entgegenhaltungen:
**DE - U - 8 101 023**
**US - A - 2 935 287**

(73) Patentinhaber: **Börner, Jürgen, Industriegebiet,
D-5561 Landscheid-Niederkail (DE)**

(72) Erfinder: **Börner, Jürgen, Industriegebiet,
D-5561 Landscheid-Niederkail (DE)**

(74) Vertreter: **Patentanwälte Grünecker, Dr. Kinkeldey, Dr.
Stockmair, Dr. Schumann, Jakob, Dr. Bezold, Meister,
Hilgers, Dr. Meyer-Plath, Maximilianstrasse 58,
D-8000 München 22 (DE)**

## Beschreibung

Die Erfindung betrifft einen Halter für ein Küchengerät, mit einem einen nach oben offenen Einschub für das Küchengerät aufweisenden, im wesentlichen rechteckförmigen Grundelement.

Bei dem Küchengerät handelt es sich insbesondere um einen Gemüse- oder Obstschneider, der aus einem flachen Rahmen mit V-förmigen Messern besteht, in den von einem Ende aus austauschbare Schneideinsätze je nach Art des Schneidgutes und der Weise, in der das Schneidgut zu schneiden ist, eingeschoben werden können. Mittels eines Mitnehmers kann das Schneidgut in Längsrichtung des Schneiders hin und her bewegt werden, um es in Streifen oder Scheiben zu schneiden.

Aus dem DE-U-8 101 023 ist bereits ein Halter der eingangs genannten Art für ein hier interessierendes Küchengerät beschrieben, der dazu dient, den Rahmen mit den V-förmigen Messern des Küchengerätes sowie die verschiedenen Einschübe und gegebenenfalls auch den Mitnehmer für das Schneidgut aufzunehmen, damit diese Teile übersichtlich und griffbereit auf möglichst geringem Raum ablegbar und aufbewahrbar sind.

Der bekannte Halter besteht insbesondere aus einer aufstellbaren oder aufhängbaren Basisplatte, die mit dem Aufsatz eine nach oben offene Einschubtasche und parallel daneben weitere sich von oben nach unten überlappende, oben offene Einschubtaschen für die Einsätze und den Mitnehmer für das Schneidgut bildet.

Küchengeräte, insbesondere der oben beschriebenen Art mit eingesetzten Messern, sind für die Benutzer nicht ungefährlich und können insbesondere bei unsachgemässem Gebrauch zu Verletzungen führen. Das gilt besonders dann, wenn die Geräte Kindern in die Hände fallen oder für Kinder ohne weiteres zugänglich sind.

Der vorliegenden Erfindung liegt daher die Aufgabe zugrunde, einen Halter für die einfache und sichere Aufbewahrung von Küchengeräten der eingangs genannten Art zu schaffen.

Diese Aufgabe wird erfindungsgemäss dadurch gelöst, dass an einer Wand des Einschubes wenigstens ein quer zur Einschubrichtung beweglicher Sperrzahn vorgesehen ist, der nach Einschieben des Küchengerätes in den Einschub dieses an einem Rastelement hintergreift. Das hat den Vorteil, dass das Küchengerät nach dem Einschieben in den Einschub nicht mehr ohne weiteres herausziehbar ist, so dass eine Art Kindersicherung gegenüber einem einfachen Herausziehen des Küchengerätes besteht.

Für die einfachere Handhabung der Kindersicherung ist es günstig, wenn der Sperrzahn an mindestens einer in einer Wand des Einschubes angeordneten flexiblen Zunge angebracht ist. Die Zunge wird dann beim Einschieben des Küchengerätes zurückgedrängt, bis das Rastelement den Sperrzahn überwunden hat und von diesem hintergriffen wird. Zum Herausziehen des Küchengerätes wird der Sperrzahn durch Drücken gegen die flexible Zunge ausser Eingriff gebracht.

Besonders bevorzugte Weiterbildungen des erfindungsgemässen Halters sind Gegenstand der Schutzansprüche 3 bis 14.

Im folgenden wird anhand der zugehörigen Zeichnungen ein besonders bevorzugtes Ausführungsbeispiel des erfindungsgemässen Halters näher erläutert.

Fig. 1 zeigt einen Halter mit einem als Gemüse- und Obstschneider ausgebildeten Küchengerät in schematischer Vorderansicht,

Fig. 2 den selben Gegenstand im Schnitt entlang der Linie II-II von Fig. 1, wobei das Küchengerät nur teilweise geschnitten und im übrigen stark vereinfacht wiedergegeben ist, und

Fig. 3 das Detail A von Fig. 1, nämlich das rückwärtige Teil des Einschubes, in dem die flexible Zunge ausgebildet ist, ohne Küchengerät im Schnitt entlang der Linie III-III von Fig. 2, vergrössert dargestellt.

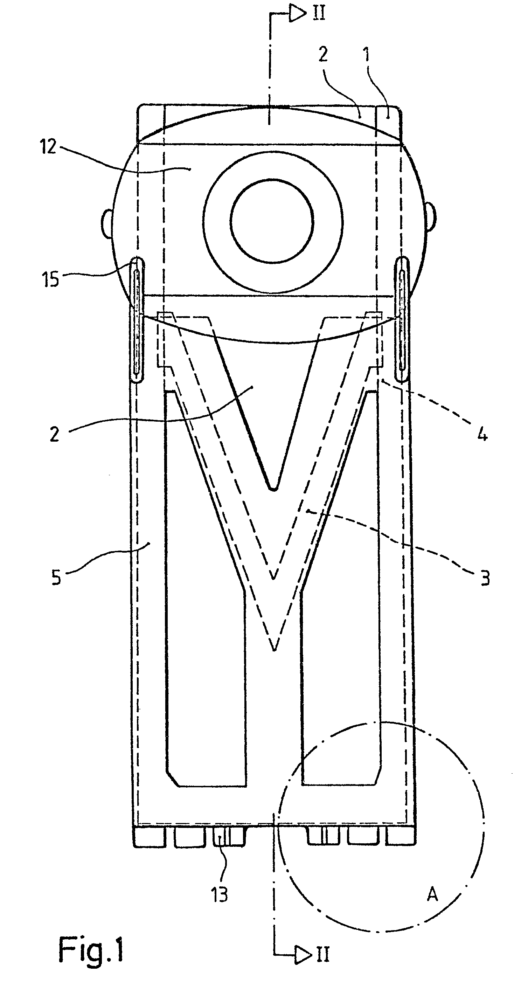

Wie in Fig. 1 schematisch dargestellt ist, besteht ein üblicher Gemüse- und Obstschneider aus einem rechteckigen flachen oder plattenförmigen Rahmen 1 mit V-förmigen Schneidmessern 3, wobei von einer Seite gegen die Schneidmesser 3 verschiedene Einsätze 2 einschiebbar sind, die je nach Art des Schneidgutes und in der Weise, in der dieses geschnitten werden soll, gewählt werden. Der Rahmen 1 des Gemüse- und Obstschneiders ist von im Querschnitt etwa U-förmigen Rillen 4 seitlich begrenzt, die an den Enden durch Stege 4a abgeschlossen sind. Funktion und Wirkungsweise eines dieser Stege 4a in Verbindung mit dem im folgenden beschriebenen Ausführungsbeispiel des erfindungsgemässen Halters werden später erläutert.

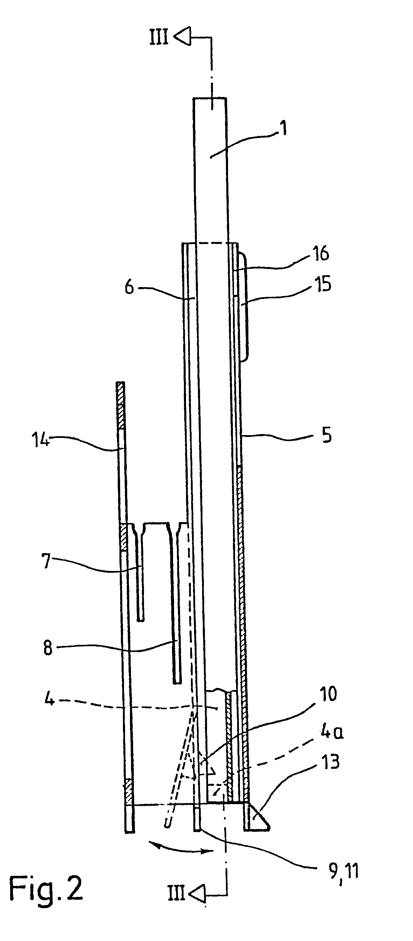

Wie insbesondere Fig. 2 erkennen lässt, umfasst ein erfindungsgemässer Halter für ein Küchengerät ein im wesentlichen rechteckiges Grundelement 5, das mit einem gleichfalls im wesentlichen rechteckigen Aufsatz versehen ist, der mit dem Grundelement 5 einen nach oben offenen Einschub 6 mit U-förmigem Querschnitt für das Küchengerät bildet. Einschub 6 und Küchengerät können aus beliebigen Küchenmaterialien, vorzugsweise aus Kunststoff, bestehen.

Parallel zum Einschub 6 sind in der Innenfläche von zwei anschliessenden Schmalseiten des Halters Nuten 7 und 8 ausgebildet, die dazu dienen zwei Einsätze 2 aufzunehmen, die in das Küchengerät wahlweise einschiebbar sind. Die Nuten 7 und 8 sind unterschiedlich lang, so dass bei gleicher Grösse der Einsätze 2 diese gestaffelt, d.h. leicht zugänglich im Halter angeordnet werden können.

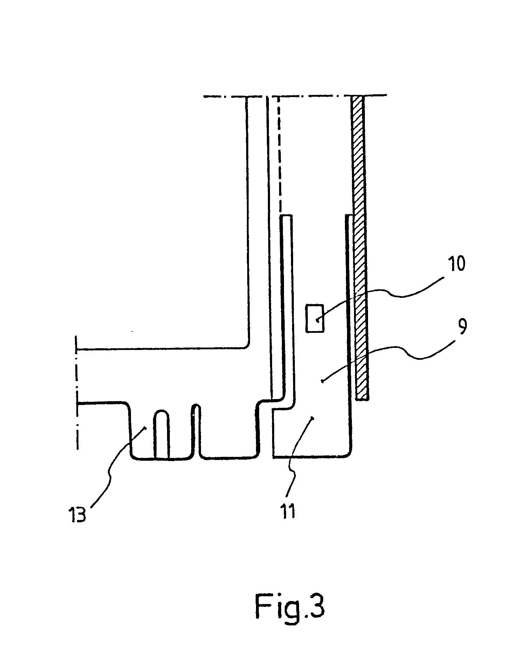

In einer Seitenwand des Einschubes 6 ist eine flexible Zunge 9 ausgebildet, an die ein Sperrzahn 10 angeformt ist, der in Ruhestellung in den Einschub 6 vorsteht. Die flexible Zunge 9 kann durch Betätigen ihres vorderen als Griffteil 11 ausgebildeten Endes vom Benutzer so weggebogen werden, dass der Sperrzahn 10 aus dem Einschub 6 herauskommt (vgl. Doppelfall zur Andeutung der möglichen Bewegung und gestrichelte Freigabestellung in Fig. 2). Die flexible Zunge 9 ist bei dem bevorzugten Ausführungsbeispiel im in Einschubrichtung vorderen Endabschnitt einer Wand des Einschubs 6 freiendend ausgebildet (siehe auch Fig. 3) und steht mit dem Griffteil 11 über den eigentlichen Einschub 6 vor.

Eine Zunge 9 der oben beschriebenen Art kann auf zwei Seiten des Halters oder nur an einer Seite vorgesehen sein. Insbesondere ist die Zunge im Endabschnitt der einen Breitseite des Einschubes 6 für das Küchengerät ausgebildet und mit einem im Längsschnitt dreieckigen Sperrzahn 10 versehen, wie es in Fig. 2 dargestellt ist.

Das oben beschriebene Ausführungsbeispiel des erfindungsgemässen Halters dient in der bereits beschriebenen Weise dazu, ein Küchengerät im Einschub 6 sowie weitere Einsätze 2 in den Nuten 7 und 8, gegebenenfalls auch einen Mitnehmer 12 für das Schneidgut aufzunehmen. Das Küchengerät wird dabei in den Einschub 6 eingeschoben, bis das am Küchengerät ausgebildete Rastelement, hier ein Steg 4a, über den an der flexiblen Zunge 9 angeformten Sperrzahn 10 hinausgelangt ist, wie aus Fig. 2 ersichtlich. Danach kann das Küchengerät nicht mehr ohne weiteres entgegen der Einschubrichtung bewegt werden. Andererseits begrenzt ein nicht dargestellter Anschlag die Einschubtiefe des Küchengerätes.

Wenn der Sperrzahn 10 hinter das Rastelement, das ist der Steg 4a, am Küchengerät eingreift, ist sichergestellt, dass das Küchengerät mit den Schneidmessern 3 nicht ohne weiteres aus dem Halter herausgezogen werden kann. Dazu ist es vielmehr notwendig, die flexible Zunge 9 vornehmlich durch Betätigung des Griffteils 11 so abzubiegen, dass der Sperrzahn 10 aus dem Einschub 6, mindestens jedoch aus der Bewegungsbahn des Küchengerätes im Einschub 6 herausgebracht wird. Dann kann das Küchengerät aus dem Halter herausgezogen werden, wonach die flexible Zunge 9 wieder losgelassen wird, so dass der Sperrzahn 10 wieder im nunmehr freien Einschub 6 vorsteht.

Das Grundelement 5 des Halters ist hier an dem in Einschubrichtung des Küchengerätes vorderen Ende mit Füssen 13 versehen, so dass der Halter aufrecht stehen kann. Zusätzlich ist das Grundelement 5 mit einer Öse 14 zum Aufhängen versehen.

Schliesslich weist das Grundelement 5 auf seiner Vorderseite zwei Rippen 15 auf. Diese bilden zusammen mit Seitenwänden des Einschubs 6 nach oben offene Schlitze 16 zur Aufnahme des Mitnehmers 12 (vgl. Fig. 1 und 2).

## Patentansprüche

1. Halter für ein Küchengerät, mit einem einen nach oben offenen Einschub (6) für das Küchengerät aufweisenden im wesentlichen rechteckförmigen Grundelement (5), dadurch gekennzeichnet, dass an einer Wand des Einschubes (6) wenigstens ein quer zur Einschubrichtung beweglicher Sperrzahn (10) vorgesehen ist, der nach Einschieben des Küchengerätes (1) in den Einschub (6) dieses an einem Rastelement hintergreift.

2. Halter nach Anspruch 1, dadurch gekennzeichnet, dass der Sperrzahn (10) an mindestens einer in einer Wand des Einschubes (6) angeordneten flexiblen Zunge (9) angebracht ist.

3. Halter nach Anspruch 1 und/oder 2, dadurch gekennzeichnet, dass die Zunge (9) im in Einschubrichtung vorderen Endabschnitt der Wand des Einschubes (6) freiendend ausgebildet ist und über den Einschub (6) hinaus vorsteht.

4. Halter nach mindestens einem der Ansprüche 1 bis 3, dadurch gekennzeichnet, dass die Zunge (9) im seitlichen Endabschnitt der an die Breitseite des Küchengerätes (1) angrenzenden Wand des Einschubes (6) ausgebildet ist.

5. Halter nach mindestens einem der Ansprüche 1 bis 4, dadurch gekennzeichnet, dass nur auf einer Seite des Einschubes (6) eine Zunge (9) vorgesehen ist.

6. Halter nach mindestens einem der Ansprüche 1 bis 5, dadurch gekennzeichnet, dass das vordere Ende (11) der Zunge (9) verbreitert ausgebildet ist.

7. Halter nach mindestens einem der Ansprüche 1 bis 6, dadurch gekennzeichnet, dass der Sperrzahn (10) im Längsschnitt dreieckförmig ausgebildet ist.

8. Halter nach mindestens einem der Ansprüche 1 bis 7, dadurch gekennzeichnet, dass in einem ebenfalls im wesentlichen rechteckförmigen, auf einer Breitseite des Grundelementes befindlichen Aufsatz weitere Führungen zur Aufnahme von plattenförmigen Einsätzen (2) für das Küchengerät (1) vorgesehen sind.

9. Halter nach Anspruch 8, dadurch gekennzeichnet, dass die Führungen als Nuten (7, 8) in der Innenfläche der Seitenwand der Schmalseite des Aufsatzes ausgebildet sind.

10. Halter nach Anspruch 9, dadurch gekennzeichnet, dass die Nuten (7, 8) verschiedene Längen haben.

11. Halter nach Anspruch 9 oder 10, dadurch gekennzeichnet, dass die Nuten (7, 8) parallel zueinander und parallel zum Einschub (6) ausgebildet sind.

12. Halter nach mindestens einem der Ansprüche 1 bis 11, dadurch gekennzeichnet, dass das Grundelement (5) mit dem Aufsatz am in Einschubrichtung vorderen Ende mit Füssen versehen ist.

13. Halter nach mindestens einem der Ansprüche 1 bis 12, dadurch gekennzeichnet, dass das Grundelement (5) mit einer Aufhängeeinrichtung versehen ist.

14. Halter nach mindestens einem der Ansprüche 1 bis 13, dadurch gekennzeichnet, dass das Grundelement (5) Rippen (15) aufweist, welche zusammen mit Seitenwänden des Einschubes (6) nach oben offene Schlitze (16) zur Aufnahme eines Mitnehmers (12) bilden.

## Claims

1. Holder for a kitchen appliance, with an essentially rectangular basic element (5) which has a slide-in unit (6) open at the top for the kitchen appliance, characterized in that on one wall of the slide-in unit (6) there is at least one ratchet (10) which is movable transversely relative to the slide-in direction and which, after the kitchen appliance (1) has been pushed into the slide-in unit (6), engages behind the kitchen appliance (1) at an engagement element.

2. Holder according to Claim 1, characterized in that the ratched (10) is attached to at least one flexible tongue (9) arranged in one wall of the slide-in unit (6).

3. Holder according to Claim 1 and/or 2, characterized in that the tongue (9) terminates freely in the end portion of the wall of the slide-in unit (6) located at the front in the slide-in direction and projects beyond the slide-in unit (6).

4. Holder according to at least one of Claims 1 to 3, characterized in that the tongue (9) is formed in the lateral end portion of that wall of the slide-in unit (6) which is adjacent to the wide side of the kitchen appliance (1).

5. Holder according to at least one of Claims 1 to 4, characterized in that a tongue (9) is provided on only one side of the slide-in unit (6).

6. Holder according to at least one of Claims 1 to 5, characterized in that the front end (11) of the tongue (9) is widened.

7. Holder according to at least one of Claims 1 to 6, characterized in that the ratched (10) is triangular in longitudinal section.

8. Holder according to at least one of Claims 1 to 7, characterized in that further guides for receiving plate-shaped inserts (2) for the kitchen appliance (1) are provided in a likewise essentially rectangular attachment located on a wide side of the basic element.

9. Holder according to Claim 8, characterized in that the guides are designed as grooves (7, 8) in the inner face of the side wall of the narrow side of the attachment.

10. Holder according to Claim 9, characterized in that the grooves (7, 8) have different lengths.

11. Holder according to Claim 9 or 10, characterized in that the grooves (7, 8) are formed parallel to one another and parallel to the slide-in unit (6).

12. Holder according to at least one of Claims 1 to 11, characterized in that the basic element (5) together with the attachment is equipped with feet at the end located at the front in the slide-in direction.

13. Holder according to at least one of Claims 1 to 12, characterized in that the basic element (5) is equipped with a suspension device.

14. Holder according to at least one of Claims 1 to 13, characterized in that the basic element (5) has ribs (15) which, together with side walls of the slide-in unit (6), form slots (16) open at the top for receiving a carrier (12).

**Revendications**

1. Support pour un ustensile de cuisine, comportant un élément de base (5) essentiellement rectangulaire et présentant un tiroir (6) ouvert vers le haut pour l'ustensile de cuisine, caractérisé en ce qu'il est prévu sur une paroi du tiroir (6) au moins une dent d'arrêt (10) mobile transversalement à la direction d'introduction et qui, après l'introduction de l'ustensile de cuisine (1) dans le tiroir (6) mord l'ustensile par l'arrière sur un élément d'arrêt (10).

2. Support selon la revendication 1, caractérisé en ce que la dent d'arrêt (10) est placée sur au moins une languette flexible (9) disposée dans une paroi du tiroir (6).

3. Support selon la revendication 1 et/ou 2, caractérisé en ce que la languette (9) est prévue de manière à se terminer librement dans la section finale avant dans le sens d'introduction de la paroi du tiroir (6) et dépasse à l'extérieur du tiroir (6).

4. Support selon au moins l'une des revendications 1 à 3, caractérisé en ce que la languette (9) est réalisée dans la section latérale finale de la paroi du tiroir (6) adjacente au côté large de l'ustensile de cuisine (1).

5. Support selon au moins l'une des revendications 1 à 4, caractérisé en ce qu'il est prévu une languette (9) sur un côté seulement du tiroir (6).

6. Support selon au moins l'une des revendications 1 à 5, caractérisé en ce que l'extrémité avant (11) de la languette (9) est élargie.

7. Support selon au moins l'une des revendications 1 à 6, caractérisé en ce que la dent d'arrêt (10) a une section longitudinale triangulaire.

8. Support selon au moins l'une des revendications 1 à 7, caractérisé en ce qu'il est prévu, dans une garniture également essentiellement rectangulaire, se trouvant sur un côté large de l'élément de base, d'autres guidages destinés à accueillir des inserts (2) en forme de plaques pour l'ustensile de cuisine (1).

9. Support selon la revendication 8, caractérisé en ce que les guidages se présentent sous la forme de rainures (7, 8) dans la surface intérieure de la paroi latérale du côté étroit de la garniture.

10. Support selon la revendication 9, caractérisé en ce que les rainures (7, 8) ont des longueurs différentes.

11. Support selon la revendication 9 ou 10, caractérisé en ce que les rainures (7, 8) sont parallèles les unes aux autres et parallèles au tiroir (6).

12. Support selon au moins l'une des revendications 1 à 11, caractérisé en ce que l'élément de base (5) comportant la garniture est muni de pieds à l'extrémité avant dans la direction d'introduction.

13. Support selon au moins l'une des revendications 1 à 12, caractérisé en ce que l'élément de base (5) est muni d'un dispositif de suspension.

14. Support selon au moins l'une des revendications 1 à 15, caractérisé en ce que l'élément de base (5) présente des nervures (15) qui forment avec les parois latérales du tiroir (6) des rainures (16) ouverts vers le haut, destinées à accueillir un poussoir (12).

Fig.1

Fig.2

Fig.3